# EUROPEAN PATENT APPLICATION

(11) **EP 4 556 511 A1**
(43) Date of publication of application: **21.05.2025**
(21) Application number: 23839686.5
(22) Date of filing: 13.07.2023
(51) Int. Cl.: C08J 3/21, C08F 10/14, C08K 5/07, C08K 5/13, C08L 23/18

(54) **METHOD FOR PRODUCING MELT/MIXED COMPOSITION AND MELTED/MIXED COMPOSITION**

(30) Priority: 14.07.2022 JP 2022113223
(71) Applicant: Kuraray Co., Ltd., Kurashiki-shi, Okayama 710-0801 (JP)
(72) Inventor: MURATA Yusuke, Tsukuba-shi, Ibaraki 305-0841 (JP); INADA Tsubasa, Tsukuba-shi, Ibaraki 305-0841 (JP); MATSUBARA Yuki, Tsukuba-shi, Ibaraki 305-0841 (JP); SANO Yuki, Tokyo 100-0004 (JP); SATO Yu, Tsukuba-shi, Ibaraki 305-0841 (JP)
(74) Representative: D Young & Co LLP
(86) International application number: PCT/JP2023/025925
(87) International publication number: WO 2024/014514

(57) **Abstract**

A method for producing a melt-kneaded composition comprising a step of performing melt-kneading of 3-methyl-1-butene polymer and an alkyl radical scavenger, in which the melt-kneading is performed at 300 to 380 °C, and in which the melt-kneading is performed by injecting an inert gas into a melt kneader or the melt-kneading is performed by degassing the inside of the melt-kneader under reduced pressure, and a melt-kneaded composition.

## Description

### Technical Field

The present invention relates to a method for producing a melt-kneaded composition containing 3-methyl-1-butene polymer and a melt-kneaded composition.

### Background Art

3-methyl-1-butene polymers have a high melting point among thermoplastic polyolefin resins and are useful as heat-resistant polyolefins. However, since the 3-methyl-1-butene polymer has a high melting point, it must be melt-kneaded at a high temperature. Therefore, there has been a problem that the 3-methyl-1-butene polymer is deteriorated (decomposed) due to heat, oxidation, etc., during melt-kneading, and deterioration in physical properties such as a decrease in the viscosity of the melt and a decrease in the mechanical properties of a molded product cause.

In view of the fact that the effect of antioxidants is lost in a short period of time, combinations of antioxidants was studied in Patent Literature 1. In Patent Literature 2, the types and combinations of antioxidants to be added was studied in order to prevent the oxidative deterioration of a 3-methyl-1-butene polymer during melt-kneading.

On the other hand, in order to ensure the stability of polyolefins during heat molding, alkyl radical scavengers are sometimes used. For example, in Patent Literature 3, a polyolefin composition containing a polyolefin, a hindered phenol-based compound, an acrylate-based compound, and a phosphorus-based compound is described in order to ensure heat resistance during high temperature processing when molding fibers, etc. Furthermore, in Patent Literature 4, there is description about oxidative stabilization of polyolefin-based thermoplastic resins, and a composition containing a thermoplastic resin, a phenol antioxidant, an aromatic amine and/or an N,N'-substituted oxamide antioxidant, and a lactone antioxidant, is described.

### Citation List

### Patent Literature

PTL 1: JPS61-181844A
PTL 2: JPH06-100742A
PTL 3: JPH05-059227A
PTL 4: WO 2022/31038

### Summary of Invention

### Technical Problem

In order to prevent a 3-methyl-1-butene polymer from being thermally deteriorated during melt-kneading, it is considered to shorten the melt-kneading time as much as possible.

However, the required melt-kneading time varies depending on the melt-kneader, and the larger the melt-kneader, the longer the melt-kneading time tends to be, therefore, not using a large melt-kneader in order to shorten the melt-kneading time is disadvantageous from the viewpoint of productivity.

As described above, it is practically difficult to avoid exposing 3-methyl-1-butene polymers to high temperatures for long periods of time. Furthermore, when the resin composition has poor thermal stability, the reproducibility in the differences between kneading devices cannot be ensured, making it difficult to stably produce molded products. Furthermore, even when the melt-kneading time is short, the accumulated melt-kneading time will inevitably become longer by stacking recycle of scrap materials (material recycle).

As described above, in order to prevent the 3-methyl-1-butene polymer from being thermally deteriorated, the use of antioxidants, alkyl radical scavengers, etc., has been investigated.

However, in Patent Literatures 1 and 2, it was not studied about the stability of physical properties against heat for a long time during melt-kneading. Actually, the inventors have tested the methods described in Patent Literatures 1 and 2, however the compositions containing a 3-methyl-1-butene polymer have insufficient long time thermal stability.

In Patent Literature 3, the use of 3-methyl-1-butene polymers as polyolefins was not studied. As a result of the tests conducted by the inventors, even when the method described in Patent Literature 3 is used, long time thermal stability of a composition containing a 3-methyl-1-butene polymer was not obtained. In addition, in Patent Literature 4, the use of a 3-methyl-1-butene polymer was not studied, and only the thermal stability at a temperature lower than the melting point of the 3-methyl-1-butene polymer was studied. Therefore, even when the technique described in Patent Literature 4 is used, it is not possible to expect long time thermal stability for a composition containing a 3-methyl-1-butene polymer.

Therefore, the present invention is to provide a method for producing a melt-kneaded composition, which can maintain stability of physical properties even when melt-kneaded for a long time, and a melt-kneaded composition. More specifically, the present invention is to provide a method for producing a melt-kneaded composition which maintains stable physical properties even when melt-kneaded for a long time, has good productivity, and is capable of obtaining a molded product having good mechanical properties, and a melt-kneaded composition.

Other problems will be apparent to those skilled in the art from the disclosure of this description.

### Solution to Problem

As a result of intensive studies to solve the above problems, the present inventors have conceived of the present invention described below and found that the problems can be solved.

In other words, the present invention is as follows.

[1] A method for producing a melt-kneaded composition comprising a step of performing melt-kneading of 3-methyl-1-butene polymer and an alkyl radical scavenger at 300 to 380 °C under a lower oxygen state than that of atmospheric air.
[2] The method for producing a melt-kneaded composition according to the above item [1], further comprising a step of injecting an inert gas into a melt-kneader, in which the melt-kneading is performed in the melt kneader.
[3] The method for producing a melt-kneaded composition according to the above item [1] or [2], further comprising a step of degassing the inside of a melt-kneader under reduced pressure, in which the melt-kneading is performed in the melt kneader.
[4] A method for producing a melt-kneaded composition comprising a step of performing melt-kneading of 3-methyl-1-butene polymer and an alkyl radical scavenger, in which the melt-kneading is performed at 300 to 380 °C, and
   in which the melt-kneading is performed by injecting an inert gas into a melt-kneader or the melt-kneading is performed by degassing the inside of the melt-kneader under reduced pressure.
[5] The method for producing a melt-kneaded composition according to any one of the above items [1] to [4], in which the melt-kneading is performed for 1 to 15 minutes.
[6] The method for producing a melt-kneaded composition according to any of the above items [1] to [5], in which the 3-methyl-1-butene polymer is at least one selected from the group consisting of a 3-methyl-1-butene homopolymer and a copolymer of 3-methyl-1-butene and an α-olefin having 2 to 20 carbon atoms.
[7] The method for producing a melt-kneaded composition according to the above item [6], in which a content of structural units derived from the α-olefin in the copolymer is more than 0 mol% and 20 mol% or less.
[8] The method for producing a melt-kneaded composition according to any of the above items [1] to [7], in which the alkyl radical scavenger comprises at least one selected from the group consisting of an acrylphenol compound and a benzofuranone compound.
[9] The method for producing a melt-kneaded composition according to the above items [8], in which the acrylphenol compound is represented by the following general formula (I): 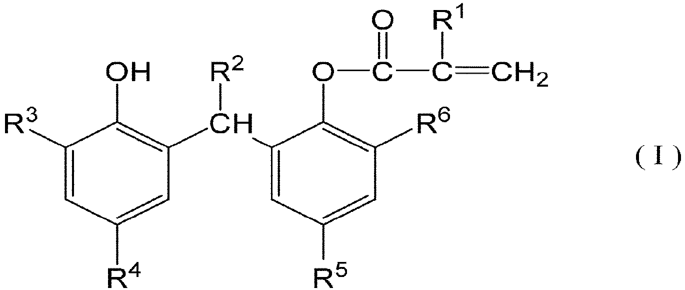 (in the general formula (I), R¹ represents a hydrogen atom or a methyl group, R² represents a hydrogen atom or an alkyl group having 1 to 3 carbon atoms, and R³, R⁴, R⁵ and R⁶ each independently represent an alkyl group having 1 to 9 carbon atoms).
[10] The method for producing a melt-kneaded composition according to the above item [8] or [9], in which the benzofuranone compound is represented by the following general formula (II): 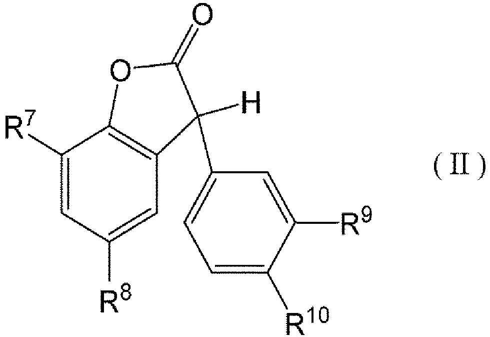 (in the general formula (II), R⁷ and R⁸ each independently represent an alkyl group having 1 to 4 carbon atoms, and R⁹ and R¹⁰ each independently represent an alkyl group having 1 to 9 carbon atoms).
[11] The method for producing a melt-kneaded composition according to any of the above items [1] to [10], in which a blending amount of the alkyl radical scavenger is 0.01 to 1.00 parts by mass based on 100 parts by mass of the 3-methyl-1-butene polymer.
[12] The method for producing a melt-kneaded composition according to any of the above items [1] to [11], in which in the step of melt-kneading, the melt-kneading is performed by further adding at least one antioxidant selected from the group consisting of a phenol-based antioxidant and a phosphorus-based antioxidant.
[13] A melt-kneaded composition which is produced by the method for producing a melt-kneaded composition according to any of the above items [1] to [12].

### Advantageous Effects of Invention

According to the present invention, a method for producing a melt-kneaded composition which maintains stable physical properties even when melt-kneaded for a long time, has good productivity, and is capable of obtaining a molded product having good mechanical properties, and a melt-kneaded composition, can be provided.

### Description of Embodiments

It will be explained in the following based on an example of the embodiments of the present invention. However, the embodiments shown below is an example for embodying the technical idea of the present invention, and the present invention is not limited to the following description.

In addition, in the description herein, preferred modes of the embodiments are shown, but a combination of two or more of individual preferred modes is also a preferred mode. Regarding the matters indicated by numerical ranges, in a case where there are several numerical ranges, it is possible to selectively combine a lower limit value and an upper limit value thereof to obtain a preferred mode.

In the description herein, when there is a description pertaining to a numerical range of "XX to YY," the description means "XX or more and YY or less".

A melt-kneaded composition and a method for producing thereof of the present embodiment comprising
a step of performing melt-kneading of 3-methyl-1-butene polymer and an alkyl radical scavenger,
in which the melt-kneading is performed at 300 to 380 °C, and in which in the step of melt-kneading, the melt-kneading is performed by injecting an inert gas into a melt kneader, or in which the melt-kneading is performed by degassing the inside of the melt-kneader under reduced pressure.

Since 3-methyl-1-butene polymers have a high melting point of about 280 ° C or higher, even when an antioxidant which is recommended for high-temperature molding in this field, is added to the composition, the stability of physical properties cannot be maintained due to thermal deterioration during high temperature melt-kneading at about 300 °C or higher, which may cause a deterioration in the mechanical properties of a molded product. The inventors focused on the fact that a 3-methyl-1-butene polymer may cause decomposition originating from an alkyl radical (R·) by melt-kneaded at high temperature, and prepared a composition in which an alkyl radical scavenger is added to a 3-methyl-1-butene polymer. However, even when an alkyl radical scavenger is added, it was not easy to suppress thermal deterioration due to melt kneading at high temperature. Therefore, the inventors considered that even when an alkyl radical scavenger is used, decomposition by oxygen would proceed before thermal decomposition, and focused on the atmospheric conditions within the apparatus during melt-kneading. As a result, they found that it is effective to melt-mix the polymer with a low oxygen concentration in the melt-kneader in addition to adding an alkyl radical scavenger to 3-methyl-1-butene polymer, and after further studies, they achieved the present invention.

**In** this embodiment, the "long time" is, for example, about 15 minutes. The "a step of melt-kneading" generally contains a step of melt-kneading a 3-methyl-1-butene polymer and an alkyl radical scavenger in a melt-kneader. Further, a method for the melt-kneaded composition or the "a step of melt-kneading" comprises either a step of injecting an inert gas into a melt-kneader or a step of degassing the inside of the melt-kneader under reduced pressure, or may comprise both steps. For example, a step of injecting an inert gas may be performed upstream of the melt-kneader, and a step of degassing under reduced pressure may be performed downstream than it. The "step of injecting" or the "step of degassing under reduced pressure" may be performed prior to melt-kneading of the 3-methyl-1-butene polymer and the alkyl radical scavenger, for example, before the start of heating, before the start of shearing, or before the start of heating and shearing, and is preferably continued during the melt-kneading.

<Method for producing Melt-kneaded composition>

### [3-methyl-1-butene polymer]

The 3-methyl-1-butene polymer may be a 3-methyl-1-butene homopolymer or a copolymer of 3-methyl-1-butene and an unsaturated hydrocarbon. Examples of the unsaturated hydrocarbon include an α-olefin, and from the viewpoint of good copolymerizability, it is preferably an α-olefin having 2 to 20 carbon atoms.

From the viewpoint of suitably exhibiting the physical properties of 3-methyl-1-butene, the 3-methyl-1-butene polymer is preferably at least one selected from the group consisting of a 3-methyl-1-butene homopolymer and a copolymer of 3-methyl-1-butene and an α-olefin having 2 to 20 carbon atoms.

When the 3-methyl-1-butene polymer is the copolymer, the content of structural units derived from an α-olefin in the copolymer is preferably more than 0 mol% and 20 mol% or less.

From the viewpoint of suitably exhibiting the physical properties of the α-olefin, the content of structural units derived from the α-olefin in the copolymer is more preferably 0.1 mol% or more, and further preferably 0.5 mol% or more.

From the viewpoint of suitably maintaining the physical properties of 3-methyl-1-butene, the content of structural units derived from the α-olefin in the copolymer is more preferably 15 mol% or less, and further preferably 10 mol% or less.

The content of the structural unit derived from an α-olefin in the copolymer can be determined by a Fourier transform infrared spectrophotometer (FT-IR). Specifically, it can be measured by a method described in Examples.

From the viewpoint of suitably exhibiting the physical properties of 3-methyl-1-butene, the α-olefin having 2 to 20 carbon atoms is preferably an α-olefin having 4 to 16 carbon atoms, and more preferably an α-olefin having 4 to 12 carbon atoms. Further, the α-olefin having 2 to 20 carbon atoms may be linear or branched chain.

Examples of the α-olefins having 2 to 20 carbon atoms include ethylene, propylene, 1-butene, 1-pentene, 1-hexene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicosene, vinylcyclohexene, and vinylnorbornane.

The α-olefins having 2 to 20 carbon atoms may be used alone or may be used in combination of two or more thereof.

**In** the present embodiment, a method for producing the 3-methyl-1-butene polymer is not particularly limited, and it can be produced using a known catalyst such as a Ziegler-Natta catalyst or a metallocene catalyst. As a method for producing a 3-methyl-1-butene polymer, for example, as described in JPS61-103910A, it can be obtained as a powder by homopolymerizing 3-methyl-1-butene or copolymerizing 3-methyl-1-butene with the above-mentioned α-olefin in the presence of a catalyst.

The stereoregularity of the 3-methyl-1-butene polymer may be isotactic or syndiotactic. The copolymer may be a random copolymer, a block copolymer, or an alternating copolymer.

### [Alkyl radical scavenger]

**In** the present embodiment, the "alkyl radical scavenger" refers to a compound having a function of reacting with an alkyl radical derived from a 3-methyl-1-butene polymer to stabilize the alkyl radical, thereby suppressing the subsequent chain reaction of carbon-carbon bond dissociation.

The alkyl radical scavenger preferably contains at least one selected from the group consisting of an acrylphenol compound and a benzofuranone compound.

The alkyl radical scavenger may be used alone or may be used in combination of two or more thereof.

### Acrylphenol Compounds

The acrylphenol compound used in this embodiment can be represented, for example, by the following general formula (I).

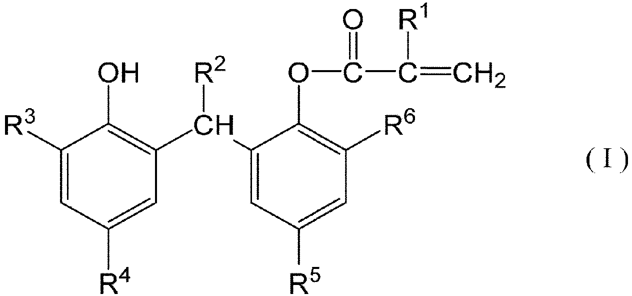

In the general formula (I), R¹ represents a hydrogen atom or a methyl group, R² represents a hydrogen atom or an alkyl group having 1 to 3 carbon atoms, and R³, R⁴, R⁵ and R⁶ each independently represent an alkyl group having 1 to 9 carbon atoms.

Examples of the alkyl group having 1 to 3 carbon atoms include a methyl group, an ethyl group, an n-propyl group, and an isopropyl group.

"An alkyl group having 1 to 9 carbon atoms" may be linear or branched chain.

Examples of the alkyl group having 1 to 9 carbon atoms include a methyl group, an ethyl group, an n-propyl group, an isopropyl group, an n-butyl group, an isobutyl group, an s-butyl group, a t-butyl group, a 1,1-dimethylpropyl group, a 1,2-dimethylpropyl group, a 2,2-dimethylpropyl group, a 1-methylbutyl group, a 2-methylbutyl group, a 3-methylbutyl group, an n-pentyl group, an n-hexyl group, an n-heptyl group, an n-octyl group, and an n-nonyl group.

R¹ is preferably a hydrogen atom.

R² is preferably a hydrogen atom or a methyl group, and more preferably a methyl group.

R³, R⁴, R⁵ and R⁶ each independently represent preferably an alkyl group having 3 to 8 carbon atoms, more preferably an alkyl group having 5 carbon atoms, and further preferably a 1,1-dimethylpropyl group.

Examples of the acrylphenol compound represented by general formula (I) include 2,4-di-t-amyl-6-[1-(3,5-di-t-amyl-2-hydroxyphenyl)ethyl]phenyl acrylate, 2,4-di-t-butyl-6-[1-(3,5-di-t-butyl-2-hydroxyphenyl)ethyl]phenyl acrylate, and 2-t-butyl-6-[(3-t-butyl-2-hydroxy-5-methylphenyl)methyl]-4-methylphenyl acrylate.

As the alkyl radical scavenger, a commercially available product may be used, and examples of the acrylphenol compound represented by the general formula (I) include the product names "Sumilizer (registered trademark) GS" and "Sumilizer (registered trademark) GM" manufactured by Sumitomo Chemical Co., Ltd.

### <Benzofuranone compound>

The benzofuranone compound used in this embodiment can be represented, for example, by the following general formula (II).

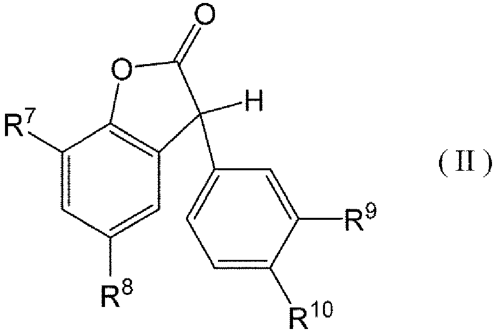

In the general formula (II), R⁷ and R⁸ each independently represent an alkyl group having 1 to 4 carbon atoms, and R⁹ and R¹⁰ each independently represent an alkyl group having 1 to 9 carbon atoms.

Examples of the alkyl group having 1 to 4 carbon atoms include a methyl group, an ethyl group, an n-propyl group, an isopropyl group, an n-butyl group, an isobutyl group, an s-butyl group, and a t-butyl group.

"An alkyl group having 1 to 9 carbon atoms" may be linear or branched chain. Examples of the alkyl group having 1 to 9 carbon atoms include a methyl group, an ethyl group, an n-propyl group, an isopropyl group, an n-butyl group, an isobutyl group, an s-butyl group, a t-butyl group, a 1,1-dimethylpropyl group, a 1,2-dimethylpropyl group, a 2,2-dimethylpropyl group, a 1-methylbutyl group, a 2-methylbutyl group, a 3-methylbutyl group, an n-pentyl group, an n-hexyl group, an n-heptyl group, an n-octyl group, and an n-nonyl group.

R⁷ and R⁸ each independently represent preferably an alkyl group having 1 to 3 carbon atoms, more preferably a methyl group.

R⁹ and R¹⁰ each independently represent preferably an alkyl group having 1 to 4 carbon atoms, more preferably a t-butyl group.

Examples of the benzofuranone compound represented by the general formula (II) include 5,7-di-t-butyl-3-(3,4-di-methyl-phenyl)-3H-benzofuran-2-one, 5,7-di-t-butyl-3-(3,4-di-propyl-phenyl)-3H-benzofuran-2-one, and 4-t-butyl-2-(5-t-butyl-2-oxo-3H-benzofuran-3-yl)phenyl-3,5-di-t-butyl-4-hydroxybenzoate.

As the alkyl radical scavenger, a commercially available product may be used, and examples of the benzofuranone compound represented by the general formula (II) include the product name "Irganox (registered trademark) HP-136" manufactured by BASF and the product name "Revonox (registered trademark) 501" manufactured by Chitec.

<Blending amount>

A blending amount of the alkyl radical scavenger based on 100 parts by mass of the 3-methyl-1-butene polymer is preferably 0.01 to 1.00 parts by mass.

When the blending amount of the alkyl radical scavenger is within the above numerical range, the stability of the physical properties of the melt-kneaded composition can be maintained during melt-kneading. Furthermore, there is no risk of the alkyl radical scavenger bleeding out, impairing the physical properties required as a resin composition, such as deterioration in moisture absorption. Furthermore, there is no risk of generating of decomposition gas during melt molding, resulting in molding defects.

In order to more easily exhibiting the effects of the present invention, the blending amount of the alkyl radical scavenger based on 100 parts by mass of the 3-methyl-1-butene polymer is more preferably 0.02 parts by mass or more, and further preferably 0.05 parts by mass or more.

From the viewpoint of a balance between the effects of the present invention and economic efficiency, the blending amount of the alkyl radical scavenger based on 100 parts by mass of the 3-methyl-1-butene polymer is more preferably 0.80 parts by mass or less, and further preferably 0.70 parts by mass or less.

When two or more types of alkyl radical scavengers are blended, the blending amount of the alkyl radical scavengers means the total blending amount of the alkyl radical scavengers.

### [Antioxidant]

From the viewpoint of heat aging resistance, at least one antioxidant selected from the group consisting of phenol-based antioxidants and phosphorus-based antioxidants may be further blended and melt-kneaded in the step of melt-kneading. In the step of melt-kneading, the melt-kneading may be performed without adding an antioxidant.

The antioxidant may be used alone or may be used in combination of two or more types.

### <Phenol-based antioxidant>

Examples of the phenol-based antioxidant include pentaerythritol tetrakis[3-(3,5-di-t-butyl-4-hydroxyphenyl)propionate], 1,3,5-tris(3,5-di-t-butyl-4-hydroxybenzyl)-1,3,5-triazine-2,4,6(1H,3H,5H)-trione, 1,3,5-tris[(4-t-butyl-3-hydroxy-2,6-xylyl)methyl]-1,3,5-triazine-2,4,6(1H,3H,5H)-trione, octadecyl-3-(3,5-di-t-butyl-4-hydroxyphenyl)propionate, thiodiethylene-bis[3-(3,5-di-t-butyl-4-hydroxyphenyl)propionate], N,N'-hexane-1,6-diylbis[3-(3,5-di-t-butyl-4-hydroxyphenyl)propionamide], 3,3',3",5,5',5"-hexa-t-butyl-α,α',α"-(mesitylene-2,4,6-triyl)tri-p-cresol, ethylene bis (oxyethylene)bis[3-(5-t-butyl-4-hydroxy-m-tolyl)propionate], hexamethylene-bis[3-(3,5-di-t-butyl-4-hydroxyphenyl)propionate], 2,6-di-t-butyl-4-[4,6-bis(octylthio)-1,3,5-triazin-2-ylamino]phenol, 3,9-bis[2-(3-(3-t-butyl-4-hydroxy-5-methylphenyl)propionyloxy)-1,1-dimethylethyl]-2, 4,8,10-tetraoxaspiro(5,5)undecane, 4,4',4"-(1-methylpropanyl-3-ylidene)tris(6-t-butyl-m-cresol), 6,6'-di-t-butyl-4,4'-butylidene dim-cresol, octadecyl-3-(3,5-di-t-butyl-4-hydroxyphenyl)-propionate, and benzenepropionic acid 3,5-bis-(1,1-dimethylethyl)-4-hydroxy-C₇-C₉ branched alkyl ester.

As the phenol-based antioxidant, commercially available products may be used, and examples thereof include "ADEKA STAB (registered trademark) AO series" manufactured by ADEKA Corporation and "Irganox (registered trademark) series" manufactured by BASF Japan Ltd.

### <Phosphorus-based antioxidant>

Examples of phosphorus-based antioxidants include 3,9-bis(2,6-di-t-butyl-4-methylphenoxy)-2,4,8,10-tetraoxa-3,9-diphosphaspiro[5.5]undecane, tetrakis(2,4-di-t-butylphenyl)-4,4'-biphenylenephosphonite, 2,2-methylenebis(4,6-di-t-butylphenyl)octylphosphite, tris(2,4-di-t-butylphenyl)phosphite, bis[2,4-bis(1,1-dimethylethyl)-6-methylphenyl]ethyl ester phosphite, bis(2,4-di-t-butylphenyl)pentaerythritol diphosphite, bis(2,4-dicumylphenyl)pentaerythritol diphosphite, di-t-butyl-m-cresyl-phosphonite, diethyl[(3,5-bis(1,1-dimethylethyl)-4-hydroxyphenyl)methyl]phosphonate, tris(2,4-di-t-butylphenyl)phosphite, tetrakis(2,4-di-t-butylphenyl)-4,4'-biphenylene diphosphonite, 3,9-bis(octadecyoxy)-2,4,8,10-tetraoxa-3,9-diphosphaspiro[5.5]undecane, tris(2,4-di-t-butylphenyl)phosphite, tris(nonylphenyl)phosphite, tetra-C₁₂-C₁₅-alkyl[propane-2,2-diylbis(4,1-phenylene)]bis(phosphite), 2-ethylhexyldiphenylphosphite, isodecyldiphenylphosphite, trisisodecylphosphite, triphenylphosphite, and 3,9-bis[2,4-bis(1-methyl-1-phenylethyl)phenoxy]-2,4,8,10-tetraoxa-3,9-diphosphaspiro[5.5]undecane.

As the phosphorus-based antioxidant, commercially available products may be used, and examples thereof include "ADK STAB (registered trademark) PEP series" and "ADK STAB (registered trademark) HP series" manufactured by ADEKA Corporation, "Irgafos (registered trademark) series" manufactured by BASF Japan Ltd., and "HOSTANOX (registered trademark) P-EPQ" manufactured by Clariant.

<Other antioxidants>

In a step of melt-kneading, antioxidants other than the phenol-based antioxidant and the phosphorus-based antioxidant may be added as long as the effects of the present invention are not impaired. Examples of the antioxidant other than the phenol-based antioxidant and the phosphorus-based antioxidant include sulfur-based antioxidants and amine-based antioxidants.

### <Blending amount>

In order to more easily exhibiting the heat aging resistance, the blending amount of the antioxidant based on 100 parts by mass of the 3-methyl-1-butene polymer is preferably 0.01 parts by mass or more, and more preferably 0.10 parts by mass or more.

From the viewpoint of economic efficiency, the blending amount of the antioxidant based on 100 parts by mass of the 3-methyl-1-butene polymer is preferably 1.00 part by mass or less, and more preferably 0.80 part by mass or less.

When two or more antioxidants are blended, the blending amount of the antioxidant means the total blending amount of the antioxidants.

### [Other additives]

In the step of melt-kneading, in addition to the 3-methyl-1-butene polymer, the alkyl radical scavenger, and the antioxidant, other additives may be further blended and melt-kneaded.

Examples of other additives include antacids, fillers, light stabilizers, antistatic agents, flame retardants, pigments, polymerization inhibitors, heavy metal deactivators, ultraviolet absorbers, nucleating agents, clarifying agents, lubricants, fluorescent brightening agents, and rust inhibitors.

The other additives may be used alone or may be used in combination of two or more types.

### <Antacid>

From the viewpoint of suppressing deterioration due to acid components generated from residual metals and the like, it is preferable to further blend an antacid to melt-kneaded, in the step of melt-kneading.

Examples of the antacids include barium laurate, calcium stearate, zinc stearate, magnesium stearate, aluminum stearate, zinc oleate, and magnesium 12-hydroxystearate.

The antacid may be used alone or may be used in combination of two or more types.

The blending amount of the antacid based on 100 parts by mass of the 3-methyl-1-butene polymer can be appropriately determined depending on the application of the melt-kneaded composition, and may be, for example, 0.01 to 200 parts by mass.

### <Filler>

Depending on the application of the melt-kneaded composition, a filler may be further blended and melt-kneaded, other than the 3-methyl-1-butene polymer and the alkyl radical scavenger in the melt-kneading step. Alternatively, a filler may be blended to a melt-kneaded composition and then melt-kneaded again.

Examples of fillers include fibrous compounds such as glass fibers, alumina fibers, resin fibers, carbon fibers, and cellulose fibers; plate-like compounds such as mica, talc, montmorillonite, and plate-like aluminum; spherical compounds such as glass beads, shirasu balloons, and acrylic balloons; needle-like compounds such as acicular metal titanates, wollastonite, acicular silica, and tin oxide; and powdered compounds such as powdered metal titanates, finely divided wood chips, titanium oxide, calcium carbonate, silica, and alumina. These fillers may be surface treated, for example with a silane coupling agent. A compatibilizer may also be used to improve the dispersibility of the filler.

The filler may be used alone or may be used in combination of two or more types.

The blending amount of the filler based on 100 parts by mass of the 3-methyl-1-butene polymer can be appropriately determined depending on the application of the melt-kneaded composition, and may be, for example, 0.01 to 300 parts by mass.

### [Melt-kneading condition]

### <Inert atmosphere>

The method for producing of this embodiment containing a step of performing melt-kneading of 3-methyl-1-butene polymer and an alkyl radical scavenger at 300 to 380 °C under a lower oxygen state than that of atmospheric air. The method for producing preferably further containing a step of injecting an inert gas into a melt kneader, in which the melt-kneading is performed in the melt-kneader. By injecting an inert gas, preferably continuously injecting an inert gas, a low oxygen state can be achieved inside the melt-kneader. The method for producing preferably further containing a step of degassing the inside of a melt kneader under reduced pressure, in which the melt-kneading is performed in the melt-kneader. By degassing under reduced pressure, preferably continuously degassing under reduced pressure, a low oxygen state can be achieved inside the melt-kneader. The method for producing preferably further containing a step of injecting an inert gas into a melt-kneader and a step of degassing the inside of a melt-kneader under reduced pressure, in which the melt-kneading is performed in the melt-kneader.

**In** one aspect of this embodiment, in a step of performing melt-kneading of 3-methyl-1-butene polymer and an alkyl radical scavenger, the melt-kneading is performed by injecting an inert gas into a melt-kneader, or the melt-kneading is performed by degassing the inside of the melt-kneader under reduced pressure.

For the method for producing of this embodiment, it is important to perform melt-kneading in an inert atmosphere or under low oxygen state in order to suppress the deterioration of the physical properties of the melt-kneaded composition due to oxygen, to effectively exhibit the function of an alkyl radical scavenger, and to produce a melt-kneaded composition which can obtain a molded product having good mechanical properties.

Here, in this embodiment, the "low oxygen state" refers to a state in which the oxygen concentration inside the melt kneader is lowered by degassing the inside of the melt-kneader under reduced pressure compared to before degassing. **In** addition, in a state of "in an inert atmosphere", by an inert gas being injected into the melt kneader, and the oxygen concentration inside the melt-kneader is lower than before the inert gas was injected. Therefore, the concept of "low oxygen state" may include a state "in an inert atmosphere". **In** the "low oxygen state", the oxygen concentration inside the melt-kneader is preferably 5% or less, more preferably 2% or less, and even more preferably 1% or less. The oxygen concentration is determined as a value measured using an oxygen concentration meter, preferably Membrane type Galvanic cell mode, more preferably oxygen concentration meters such as a Membrane type Galvanic cell mode or a Galvanic cell mode. More specifically, the oxygen concentration can be measured by the method described in Examples. As the oxygen concentration meter, for example, the "XP-3180E" (Membrane type galvanic cell mode) manufactured by Shin Cosmos Electric Co., Ltd., and its successor, the "XP-3380II-E" (galvanic cell mode) can be used.

The method of melt-kneading by injecting an inert gas into the melt-kneader may be performed by charging each component into the melt kneader while injecting an inert gas into the melt-kneader to melt-knead, and it may be performed by injecting inert gas after each component is charged into the melt-kneader, preferably before starting the heating or before starting shearing, more preferably before starting the heating and before starting the shearing, to melt-knead, or it may be performed by charging each component from a sealed supply part after an inert gas is injected into the melt-kneader to melt-knead. During the melt-kneading, the inert gas may be continuously injected into the melt-kneader.

The method of injecting the inert gas may be performed depending on the equipment provided in each melt kneader, for example, it may be performed from a supply part for a gas such as an inert gas provided in the melt kneader, from a supply part for each component provided in the melt-kneader, or from a gas vent provided in the melt kneader.

There is no limitation on the method of inj ecting as long as the inert gas can be injected throughout the entire area from the inert gas supply part to the heating part where melt-kneading is performed, and melt-kneading can be performed.

Examples of inert gases include nitrogen gas, helium gas, neon gas, argon gas, krypton gas, and carbon dioxide gas, and from the viewpoints of availability and versatility, nitrogen gas is preferred.

The method of melt-kneading by degassing inside the melt-kneader under reduced pressure may be performed by charging each component into the melt kneader while degassing inside the melt-kneader under reduced pressure to melt-knead, and it may be performed by degassing inside the melt-kneader under reduced pressure after each component is charged into the melt kneader, preferably before starting the heating or before starting shearing, more preferably before starting the heating and before starting the shearing, to melt knead, or it may be performed by charging each component from a sealed supply part after the inside of the melt-kneader is degassed under reduced pressure to melt-knead. During the melt-kneading, degassing inside the melt-kneader under reduced pressure may be performed intermittently or continuously.

The method of degassing the inside of the melt kneader under reduced pressure may be performed according to the equipment provided in each melt-kneader, and may be performed through a vacuum vent, for example. For degassing under reduced pressure, for example, a vacuum pump may be used.

There is no limitation on the method for degassing the inside of the melt-kneader under reduced pressure, as long as melt-kneading can be performed under a low oxygen state.

When degassing under reduced pressure, the inside of the melt-kneader can be brought into a vacuum state of, for example, 50 kPa or less and 0.1 kPa or more.

As the melt-kneader, single-screw extruder, a multi-screw extruder, a kneader, a Banbury mixer, or the like, which is equipped with equipment capable of melt-kneading by injecting an inert gas into the melt-kneader, or equipment capable of melt-kneading by degassing the inside of the melt-kneader under reduced pressure.

The injection of the inert gas and degassing under reduced pressure may be performed in combination. **In** this case, it is preferable to inject an inert gas upstream of the melt-kneader before charging the raw materials or together with the raw materials, and to perform degassing under reduced pressure downstream than it. More preferably, both the injection of the inert gas and the degassing under reduced pressure are continued during the melt-kneading.

### <Temperature and time, etc.>

**In** the production method of this embodiment, the melt-kneading is performed at 300 to 380 °C.

When the melt-kneading temperature is less than 300° C, the 3-methyl-1-butene polymer will not melt sufficiently, resulting in insufficient dispersion of the alkyl radical scavenger and additives. When the melt-kneading temperature exceeds 380 °C, decomposition of the raw materials such as the 3-methyl-1-butene polymer and the alkyl radical scavenger becomes significant, and the effect of the invention cannot be sufficiently obtained.

From the viewpoint of thoroughly dispersing the alkyl radical scavenger and additives throughout the 3-methyl-1-butene polymer, the melt-kneading temperature is preferably 300 °C or higher, more preferably 310 °C or higher.

From the viewpoint of suppressing significant decomposition of the raw materials, the melt-kneading temperature is preferably 380 °C or lower, more preferably 360 °C or lower.

The melt-kneading time can be adjusted depending on the size of the kneading device, etc. For example, the melt-kneading time may be 1 to 15 minutes, but is not limited to this numerical range. **In** the present embodiment, the "melt-kneading time" refers to the time during which the mixer is rotated in a batch-type kneader, and refers to the residence time of the raw materials in the device in the case of a continuous extrusion-type kneader. It is preferable that the low oxygen state is continuously maintained throughout the entire melt-kneading time.

The producing method of this embodiment is less likely to cause deterioration of physical properties due to high temperature melt-kneading. Therefore, the longer the melt-kneading time (about 15 minutes in this embodiment), the more stable the physical properties of the melt are maintained, and more likely to exhibit the effect of the present invention, that is, a melted and mixed resin composition, which can obtain a molded product having good mechanical properties, can be produced with good productivity.

The larger the melt-kneader, the greater the production volume and the longer the melt-kneading time tends to be, therefore the physical properties of the melt-kneaded composition are more likely to deteriorate. However, the production method of this embodiment can maintain the stability of the physical properties, and therefore can produce a melt-kneaded resin composition having good mechanical properties with good productivity.

The rotation speed of the mixer during melt-kneading may be 80 rpm or more, or 100 rpm or more, and may be 400 rpm or less, or 350 rpm or less.

After melt-kneading, the melt-kneaded composition is removed from the melt-kneader and cooled.

### <Melt-kneaded composition>

The present embodiment provide a melt-kneaded composition which is produced by the method for producing a melt-kneaded composition.

Regarding the melt-kneaded composition produced by the method for producing a melt-kneaded composition, for example, a part of the 3-methyl-1-butene polymer may be decomposed due to high temperature during melt-kneading, or in some cases, high temperature and shearing. **In** addition, since the blending amount of the alkyl radical scavenger is small, it is difficult to accurately specify the decomposed alkyl radical scavenger. For this reason, at present, it is practically difficult to clearly analyze and identify the structure of the melt-kneaded composition containing the decomposition products or the reaction products of the 3-methyl-1-butene polymer and the alkyl radical scavenger. Accordingly, since it is impossible or impractical under current technology to directly identify a melt-kneaded composition by its specific chemical structure, etc., there is a circumstance that it is specified by its producing method. However, as illustrated in Examples, it is clear that the melt-kneaded composition produced by the above-mentioned method for producing a melt-kneaded composition maintains stability in physical properties compared to a melt-kneaded composition produced by methods other than the above-mentioned method for producing a melt-kneaded composition.

It is possible to detect a part or all of the undecomposed alkyl radical scavenger present in the melt-kneaded composition.

When no antioxidant is contained, the total content of the 3-methyl-1-butene polymer and the alkyl radical scavenger in the melt-kneaded composition is preferably 99.0 mass% or more, and more preferably 99.5 mass% or more. The upper limit of the total content is not limited as long as the effects of the invention are not impaired, and may be, for example, 100 mass% or less, or 99.9 mass% or less.

**In** addition, when the antioxidant is contained, the total content of the 3-methyl-1-butene polymer, the alkyl radical scavenger, and the antioxidant in the melt-kneaded composition is preferably 99.0 mass% or more, and more preferably 99.5 mass% or more. The upper limit of the total content is not limited as long as the effects of the invention are not impaired, and may be, for example, 100 mass% or less, or 99.9 mass% or less.

**In** this description, the "content" is calculated based on the blending amount of each component used in the melt-kneaded composition.

As described above, after the melt-kneading, the blended 3-methyl-1-butene polymer and alkyl radical scavenger are partially or entirely reacted or decomposed, or evaporated, and it is difficult to determine the exact content of each component.

### <Melting point>

The melting point of the melt-kneaded composition of this embodiment is preferably 280 to 310 °C. When the melting point of the melt-kneaded composition is within the above range, the composition has excellent heat resistance and can suitably exhibit the properties of the 3-methyl-1-butene polymer.

The melting point of the melt-kneaded composition of this embodiment is almost the same as the melting point of the 3-methyl-1-butene polymer used as the raw material. Therefore, in this description, the melting point of the 3-methyl-1-butene polymer used as the raw material can be regarded as the melting point of the melt-kneaded composition. The melting point can be measured by a method described in Examples.

### <Melt viscosity>

The melt viscosity of the melt-kneaded composition of this embodiment at a barrel temperature of 320 °C and a shear rate of 1220 sec⁻¹ is preferably 10 to 1000 Pa·s, more preferably 20 to 500 Pa·s. When the melt viscosity of the melt-kneaded composition is 10 Pa·s or more, the strength of the molded product will be good. Further, when the melt viscosity of the melt-kneaded composition is 1000 Pa·s or less, the fluidity during molding will be good.

The melt viscosity of the melt-kneaded composition can be measured by a method described in Examples.

### <Molding method>

Depending on the application of the melt-kneaded composition, it may be molded continuously with the step of melt-kneading the 3-methyl-1-butene polymer, the alkyl radical scavenger, and other additives, such as an antioxidant and a filler, which are blended as necessary. Alternatively, it may be melt-molded again after the melt-kneaded composition is taken out once. As a molding method, for example, a general molding method such as injection molding, extrusion molding, blow molding, and vacuum molding can be used.

### <Breaking strength>

In the melt-kneaded composition of this embodiment, a breaking strength measured in accordance with JIS K 7161-1:2014 of the molded product is preferably 10 MPa or more, more preferably 25 MPa or more. When the breaking strength is 10 MPa or more, it can be said that the material has good mechanical strength.

The breaking strength can be measured by a method described in Examples.

### Example

Hereinafter, the present invention will be specifically described with reference to Examples and Comparative Examples, but the present invention is not limited thereto.

### <Measurement and Evaluation Method]

Various physical properties were measured or evaluated by the following methods.

### [Content of structural units derived from comonomers]

In Production Examples 1 and 2, the content of structural units derived from α-olefins (comonomers) other than 3-methyl-1-butene in the 3-methyl-1-butene copolymer was determined as follows by IR measurement using an FT-IR (manufactured by Ailent Technologies, device name "cary 600 series FTIR spectrometer") as an analytical device, by the ATR method.

A calibration curve was prepared from the ratio of the peak area of the bending vibration at 1,461 cm⁻¹ originating from the main chain methylene group of the 3-methyl-1-butene homopolymer and the peak area of the bending vibration at 727 cm⁻¹ originating from the side chain methylene group of the α-olefin homopolymer, and the content of each resin which was added. The IR measurement was performed on the 3-methyl-1-butene copolymer obtained in the Production Examples, and the measured values were inserted into the calibration curve to determine the content of structural units derived from α-olefins other than 3-methyl-1-butene.

### [Melting point]

The copolymer or homopolymer obtained in the production examples was heated from 30 °C to 320 °C at a rate of 10 °C/min under a nitrogen flow rate (100 mL/min) using a differential scanning calorimeter ("DSC25" manufactured by TA Instruments), held at 320 °C for 5 minutes, and then cooled to -70 °C at a rate of 10°C/min. After held at -70 °C for 5 minutes, the temperature was raised to 320 °C at a rate of 10 °C/min, and the melting point was measured.

### [Melt viscosity]

In Examples 1, 7, and 8, after blending the components shown in Table 1, the melt viscosity (Pa·s) was measured using a capillary rheometer ("Capillography 1C" manufactured by Toyo Seiki Seisakusho, Ltd.) under the conditions of a barrel temperature of 320 °C and a shear rate of 1220 sec⁻¹ (capillary: inner diameter 1.0 mm x length 10 mm, extrusion rate 10 mm/min), thereby measuring the melt viscosity of the melt-kneaded composition.

### [Stability of physical properties during melt-kneading]

### (1) Preparation of test sheet for measuring complex shear viscosity

In the examples and comparative examples, the components shown in Tables 1 and 2 were kneaded in a small kneader ("Micro 15 Compounder" manufactured by DSMXplore) at the conditions of 200 rpm and 320 °C for 4 minutes in a nitrogen atmosphere. After kneading, the melt-kneaded composition was extruded in the form of a strand and cut into pieces having a length of about 1 mm.

The above melt-kneaded composition was subjected to a vacuum hot press apparatus ("IMC-1 83B" manufactured by Imoto machinery Co., LTD) by using an oil rotary pump to reduce the pressure to -0.1 MPaG, preheated at 320 °C for 2 minutes, and then pressed at 70 kN (1.7 MPa) for 2 minutes. Thereafter, the mixture was pressed for 2 minutes at 70 kgf/cm² (6.9 MPa) in a cooling press equipped with water flow cooling to produce a pressed plate with a thickness of 0.5 mm. A cylindrical test sheet having a diameter of 8 mm was cut out from the obtained press plate.

### (2) Change in complex shear viscosity over time

Based on ISO6721-10:1999, a strain control-type dynamic viscoelasticity apparatus "ARES-G2" (manufactured by TA Instruments Japan Inc.) having a disk diameter of 8 mm was used as a parallel-plate oscillation rheometer.

The gap between the two plates was completely filled with the test sheet, and the test sheet was melt-kneaded while being subjected to vibration at a distortion of 0.1% at a temperature of 320 °C and an angular frequency of 100 rad·s⁻¹ in a nitrogen atmosphere or an air atmosphere (in the atmosphere).

After the start of the melt-kneading, the complex shear viscosity was measured every 8.5 seconds from 60 seconds to 1500 seconds. The logarithmic value of the complex shear viscosity decreases linearly with the measurement time, and the slope of the decrease was calculated, and from the absolute value of the value, the stability of the physical properties during melt-kneading was evaluated.

The evaluation results are shown in Table 1 or 2. The smaller the slope (absolute value of the numerical value), the more stable the physical properties of the melt-kneaded composition are maintained.

### (3) Complex shear viscosity retention rate

The complex shear viscosity retention rate was calculated from the complex shear viscosity values measured under the above conditions 4 minutes and 15 minutes after the start of kneading. Complex shear viscosity retention rate (%) = (complex shear viscosity 15 minutes after the start of kneading/complex shear viscosity 4 minutes after the start of kneading) × 100

The evaluation results are shown in Table 1 or 2. The higher the value of complex shear viscosity retention rate (%), the more stable the physical properties are maintained.

### [Breaking strength]

In Example 1 and Comparative Example 1, the components shown in Tables 1 and 2 were melt-kneaded in a small kneader ("Micro 15 Compounder" manufactured by DSMXplore) at the conditions of 200 rpm and 320 °C in a nitrogen atmosphere.

For each of the melt-kneaded composition at each of the elapsed times, 4 minutes and 15 minutes after the start of the melt-kneading, a small injection molding machine (Micro Injection Molding Machine 10cc manufactured by DSMXplore) was used to mold small test pieces (1BA type dumbbell test pieces described in JIS 7161-2 Appendix A) under the conditions of an injection pressure of 0.3 MPa, a retention time in the mold of 35 seconds, and a mold temperature of 180 °C.

The prepared dumbbell test pieces were stored at 23 °C and 49% humidity for 24 hours or more, and the breaking strength (MPa) was measured at 23 °C, 49% humidity, and a tensile speed of 5 mm/min using a universal material testing machine (Instron Corporation, "INSTRON5900R-5666") in accordance with JIS K 7161-1:2014. The measurement was performed five times and the average value was used.

The strength retention rate was calculated according to the following formula, based on the breaking strength of the dumbbell test pieces prepared under the conditions of 4 minutes and 15 minutes after the start of melt-kneading. Strength retention rate (%)=(breaking strength of dumbbell test piece prepared underconditions 15 minutes after the start of kneading/breaking strength of dumbbell test piece prepared under conditions 4 minutes after the start of kneading) × 100

The evaluation results are summarized in Table 3. The higher the numerical value of strength retention rate (%), the more tensile properties are retained.

### [Analysis of the amount of additives contained in the melt-kneaded composition]

The melt-kneaded compositions obtained in Example 1 and Comparative Example 5 were each injection molded to obtain a molded piece, which was then freeze-pulverized to obtain a powder. About 25 g of the obtained powder was precisely weighed out, and subjected to Soxhlet extraction with chloroform for 8 hours. After extraction, the mixture was concentrated using an evaporator (40 °C) and vacuum dried (40 °C, 6 hours). About 20 mg of the obtained solid was precisely weighed out, and the resulting solution was diluted with acetonitrile to 10 mL, followed by HPLC measurement, to calculate the amount of components (additives) present other than the 3-methyl-1-butene polymer.

### <HPLC analysis>

Equipment: ACQUITY UPLC H-class
Column: ACQUITY UPLC BEH C18 2.1 x 100 mm, 1.7 µm (waters)
Mobile phase: Solution A: 0.1 mass% formic acid aqueous solution, Solution B: acetonitrile/tetrahydrofuran = 1/1 (volume ratio)
Gradient conditions (concentration of solution B): 0 to 3 minutes: 50%, 3 to 7.1 minutes: 95%, 7.1 to 10 minutes: 50%
Flow rate: 0.4mL/min
Temperature: 40 °C
Detector: PDA (280 nm), ELSD
Injection volume: 5 µL

### [Measurement Method of oxygen concentration]

In the examples and comparative examples, the oxygen concentration was measured in parallel with the measurement of the change over time in the complex shear viscosity described above, using an oxygen concentration meter ("XP-3180E" manufactured by New Cosmos Electric Co., Ltd.) airtightly installed in a distortion-controlled dynamic viscoelasticity device "ARES-G2" (manufactured by TA Instruments Japan Inc.).

In addition, in Examples 1 to 8 and Comparative Examples 1 to 4, 7, and 8, the oxygen concentration inside the hopper was measured using an oxygen concentration meter ("XP-3180E" manufactured by New Cosmos Electric Co., Ltd.) airtightly installed in the hopper attached to a small kneader ("Micro 15 Compounder" manufactured by DSMXplore). Measurement of the oxygen concentration was started after nitrogen injection into the small kneader had continued for at least 10 minutes. Nitrogen injection was continued during the oxygen concentration measurements. While continuing the nitrogen injection, the components shown in Table 1 or 2 were then added and melt-kneaded.

### [Each Component]

The components used in the examples and comparative examples are as follows.

### <3-methyl-1-butene polymer(P3MB)>

Copolymer (A): 3-methyl-1-butene copolymer produced in Production Example 1
Copolymer (B): 3-methyl-1-butene copolymer produced in Production Example 2
Homopolymer (C): 3-methyl-1-butene homopolymer produced in Production

### Example 3

### <Alkyl radical scavenger>

A-1: 2,4-di-t-amyl-6-[1-(3,5-di-t-amyl-2-hydroxyphenyl)ethyl]phenyl acrylate, trade name "Sumilizer (registered trademark) GS", manufactured by Sumitomo Chemical Co., Ltd.
A-2: 5,7-di-t-butyl-3-(3,4-dimethyl-phenyl)-3H-benzofuran-2-one, manufactured by Tokyo Chemical Industry Co., Ltd.

### <Phenol-based antioxidant>

B-1: Pentaerythritol tetrakis[3-(3,5-di-t-butyl-4-hydroxyphenyl)propionate], product name "AO-60", manufactured by ADEKA Corporation
B-2:1,3,5-tris(3,5-di-t-butyl-4-hydroxybenzyl)-1,3,5-triazine-2,4,6(1H,3H,5H)-trione, trade name "ADEKA STAB (registered trademark) AO-20", manufactured by ADEKA Corporation

### <Phosphorus-based antioxidant>

C-1:3,9-bis(2,6-di-t-butyl-4-methylphenoxy)-2,4,8,10-tetraoxa-3,9-diphosphaspiro[5.5]undecane, trade name "ADEKA STAB (registered trademark) PEP-36", manufactured by ADEKA Corporation
C-2: A composition mainly composed of tetrakis(2,4-di-t-butylphenyl)-4,4'-biphenylene phosphonite, trade name "HOSTANOX (registered trademark) P-EPQ", manufactured by Clariant

### <Sulfur-based antioxidant>

D-1: 2,2-bis{[3-(dodecylthio)-1-oxopropoxy]methyl}propane-1,3-diylbis[3-(dodecylthio)propionate], trade name "ADEKA STAB (registered trademark) AO-412S", manufactured by ADEKA Corporation

### <Catechols>

E-1: 4-t-butyl-pyrocatechol, manufactured by Tokyo Chemical Industry Co., Ltd.

### <Nitroxy radicals>

E-2: bis(2,2,6,6-tetramethyl-4-piperidyl-1-oxyl) sebacate, manufactured by Tokyo Chemical Industry Co., Ltd.

### <Other additives>

Antacid: Zinc stearate

### [Catalyst Preparation]

### Preparation of titanium catalyst components

47.6 g (500 mmol) of anhydrous magnesium chloride, 250 mL of decane, and 234 mL (1.5 mol) of 2-ethylhexyl alcohol were reacted by heating at 130 °C for 2 hours to obtain a homogeneous solution. The resulting homogeneous solution was cooled to room temperature (23 °C) and then added dropwise over one hour to 2 L (18 mol) of titanium tetrachloride kept at -20 °C. After the dropwise addition was completed, the temperature of the mixture was raised to 110° C over 2 hours, and when it reached 110° C., 42.4 mL (160 mmol) of dibutyl phthalate was added, and the mixture was maintained at the same temperature for 2 hours with stirring. After the 2-hour reaction was completed, the mixture was allowed to stand and the supernatant was removed. Decane and hexane were added thereto, and the solid component was washed three times, and then resuspended in 2 L of titanium tetrachloride, and the reaction was again carried out by heating at 110 °C for 2 hours. After the reaction was completed, the mixture was again left to stand and the supernatant was repeatedly removed, followed by thorough washing with decane and hexane until no free titanium compound was detected during the washings. The resulting suspension was dried under reduced pressure at room temperature for 6 hours to obtain a dried titanium catalyst component.

The composition of the obtained titanium catalyst component was 4.0 mass % titanium, 56.0 mass% chlorine, 17.0 mass% magnesium, and 11.0 mass% dibutyl phthalate.

### [Production Example 1]

### Production of copolymer (A)

Into a 20 L stainless steel autoclave were placed 8.0 kg of 3-methyl-1-butene, 0.6 kg of 1-decene, 50 g of triethylaluminum diluted with hexane to a concentration of 1 mol/L, and 4 g of the titanium catalyst component produced in the above [Catalyst Preparation], and a polymerization reaction was carried out at 70 °C for 4 hours. During the polymerization reaction, hydrogen was continuously fed at a rate of 40 mL/min. After 4 hours, 200 g of isoamyl alcohol was injected to stop the reaction and remove the excess unreacted monomer. Then, 2 kg of normal heptane was introduced, and the mixture was stirred at 60 °C for 30 minutes, after which the solid content was filtered off using a pressure filter. This operation was repeated twice, and then the solvent was changed from 2 kg of normal heptane to 3 kg of 2-propanol, and the same operation was repeated twice.

7.7 kg of the obtained crude polymer was placed in a 50 L vessel equipped with a stirrer, and then 8 kg of 1 mol/L hydrochloric acid and 16 kg of 2-propanol were added thereto, followed by stirring for 1 hour. This suspension was filtered by vacuum filtration and washed with 10 kg of 2-propanol. The obtained washed polymer was dried under reduced pressure at 80 °C for 2 days to obtain 3.2 kg of copolymer (A), which is a copolymer of 3-methyl-1-butene and 1-decene.

The obtained copolymer (A) was subjected to the above-mentioned measurements, and the melting point was found to be 296 °C. Furthermore, the content of structural units derived from the comonomer 1-decene in the copolymer (A) was 1.1 mol %. The melt viscosity of the melt-kneaded composition obtained in Example 1 was 104 Pa·s.

### [Production Example 2]

### Production of copolymer (B)

The same operations as in Production Example 1 were carried out except that 0.6 kg of 1-decene was changed to 3.6 kg of 1-decene, to obtain 2.8 kg of copolymer (B), which is a copolymer of 3-methyl-1-butene and 1-decene.

The obtained copolymer (B) was subjected to the above-mentioned measurements, and the melting point was found to be 281 °C. Furthermore, the content of structural units derived from the comonomer 1-decene in the copolymer (B) was 6.4 mol%. The melt viscosity of the melt-kneaded composition obtained in Example 7 was 99 Pa·s.

### [Production Example 3]

### Production of homopolymer (C)

3.3 kg of homopolymer (C) which is a homopolymer of 3-methyl-1-butene was obtained by the same manner with the production example 1 except that 0.6 kg of 1-decene was not added.

The obtained homopolymer (C) was subjected to the above-mentioned measurements, and the melting point was found to be 305 °C. The melt viscosity of the melt-kneaded composition obtained in Example 8 was 126 Pa·s.

### [Example 1]

Using each component shown in Table 1, the melt-kneaded composition was evaluated according to the above-mentioned evaluation methods for [Stability of physical properties during melt-kneading] and [Strength retention rate].

In addition, regarding the evaluation results of the above-mentioned [Analysis of the amount of additives contained in the melt-kneaded composition], the amount of additives contained in the injection molding pieces kneaded for 4 minutes was 520 ppm by mass for A-1, 1,100 ppm by mass for B-1, and 490 ppm by mass for C-1. The amounts of additives present in the injection molding pieces kneaded for 15 minutes were 170 ppm by mass for A-1, 520 ppm by mass for B-1, and 130 ppm by mass for C-1.

### [Examples 2 to 8 and Comparative examples 1 to 8]

The evaluations were carried out by carrying out the same tests as in Example 1 except that the components and blending amounts of the compositions were changed as shown in the table. The results are shown in Table 1 or 2.

In addition, in Comparative Example 5, for the evaluation results of the above-mentioned [Analysis of the amount of additives present in the melt-kneaded composition], the amount of additives contained in the injection molding pieces kneaded for 4 minutes was 400 ppm by mass for A-1, 965 ppm by mass for B-1, and 536 ppm by mass for C-1. The amounts of additives present in the injection molding pieces kneaded for 15 minutes were 61 ppm by mass for A-1, 1183 ppm by mass for B-1, and 263 ppm by mass for C-1.

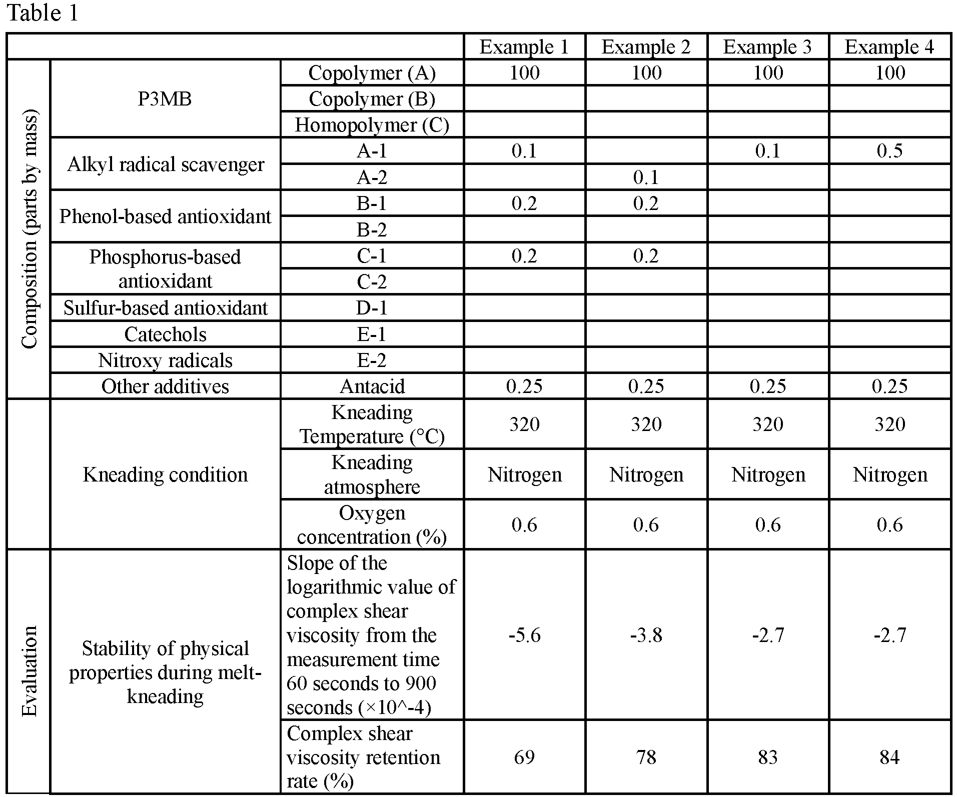

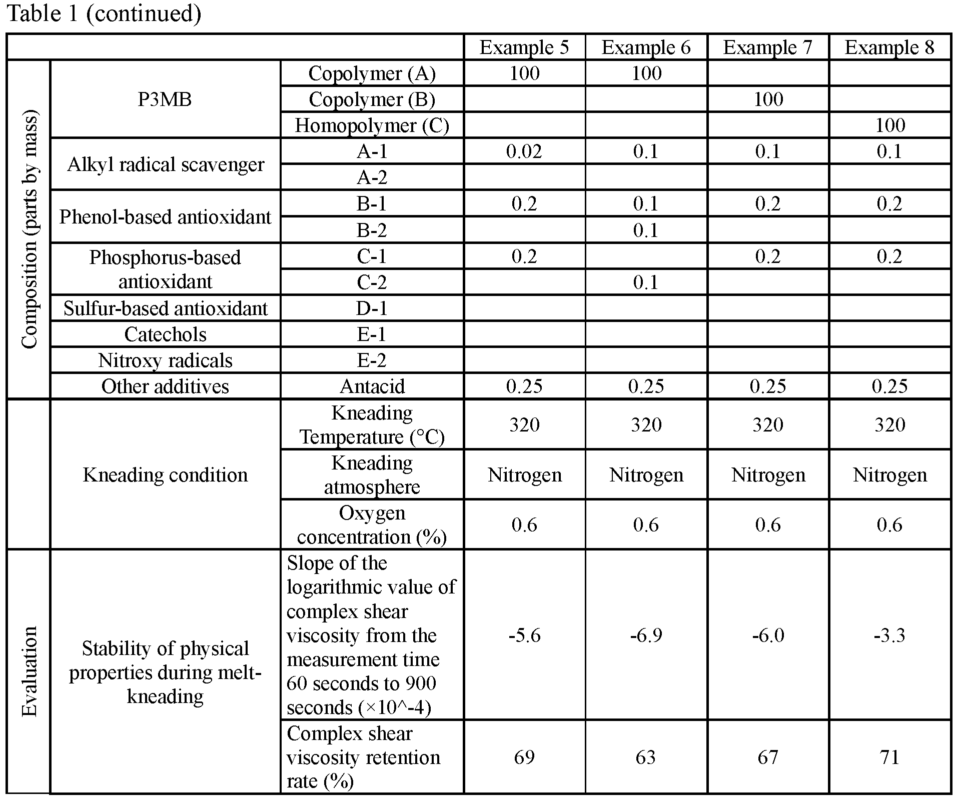

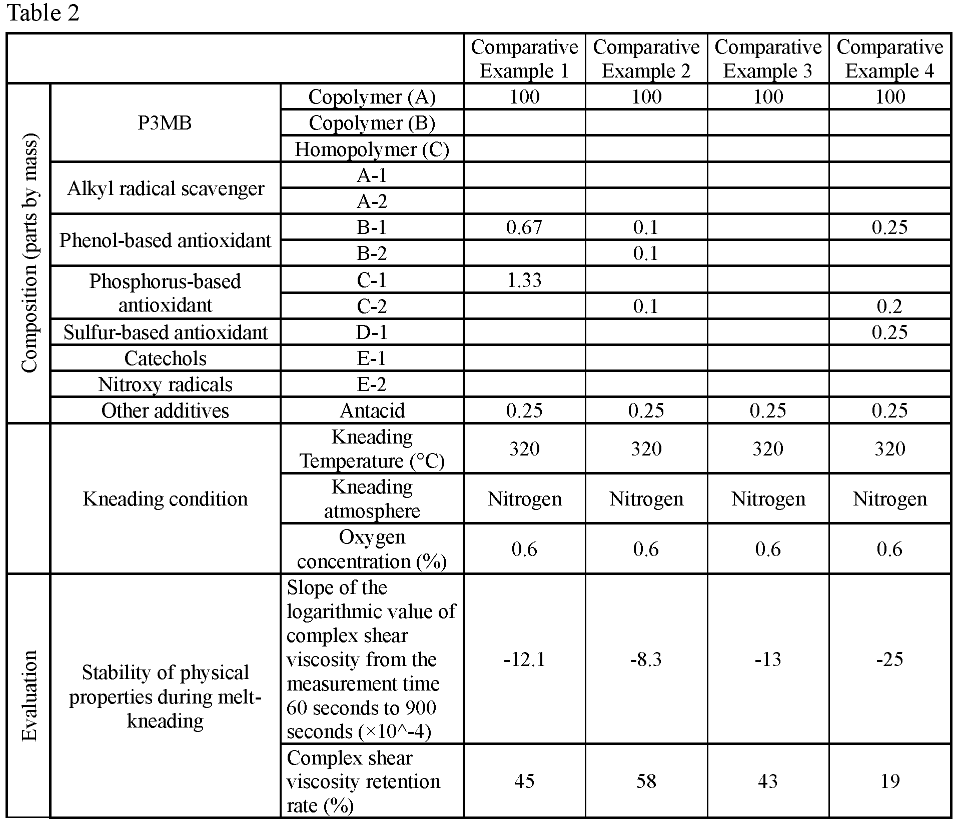

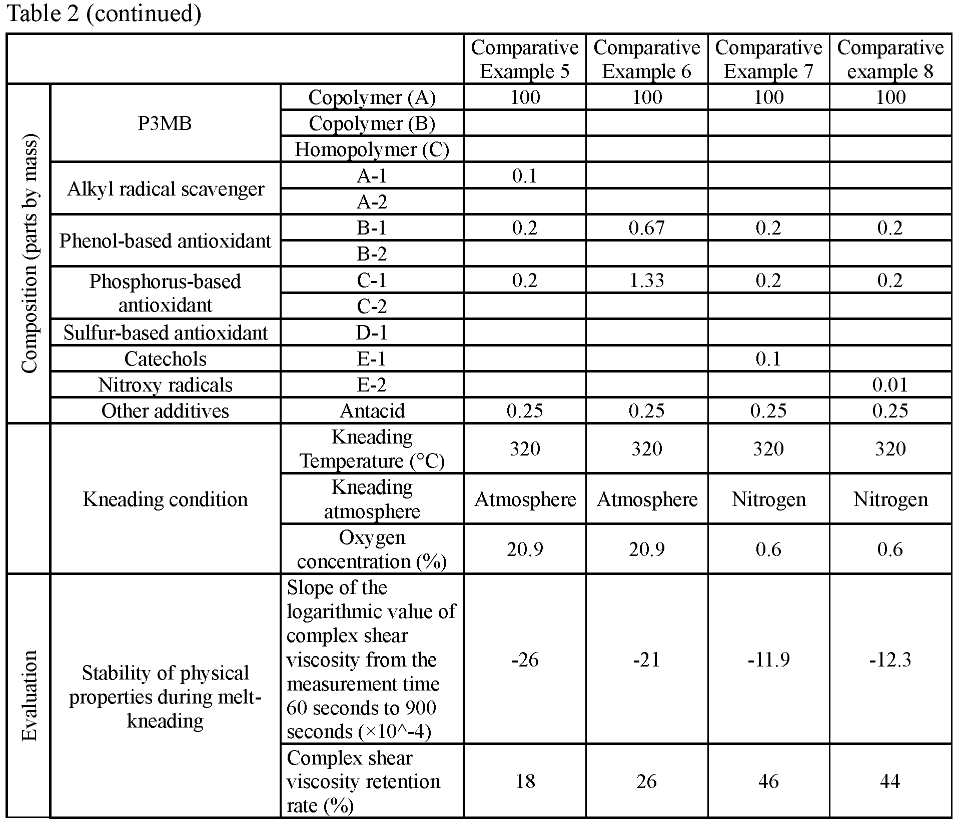

**Table 3**

| | | Example 1 | Comparative Example 1 | Comparative Example 5 |
|---|---|---|---|---|
| Kneading condition | Kneading atmosphere | Nitrogen | Nitrogen | Atmosphere |
| | Oxygen concentration (%) | 0.9 | 0.9 | 20.9 |
| Breaking strength | 4 minutes after kneading (MPa) | 46 | 32 | 21 |
| | 15 minutes after kneading (MPa) | 40 | 23 | 10 |
| | Strength retention rate (%) | 87 | 72 | 48 |

### Discussion

In Comparative Example 1, although the blending amount of the antioxidant was large as compared with Example 1, no alkyl radical scavenger was blended, therefore, the absolute value of the slope of the logarithm of the complex shear viscosity from the measurement time 60 seconds to 900 seconds was large, and both the viscosity retention rate and the strength retention rate were small. In other words, it can be seen that the deterioration of the 3-methyl-1-butene polymer during melt-kneading was rapid. Furthermore, a comparison between Example 1 and Comparative Example 1 shows that the smaller the absolute value of the number indicating the slope of the logarithmic value of the complex shear viscosity from the measurement time 60 seconds to 900 seconds, the higher the strength retention rate, that is, the higher the mechanical strength of the molded product can be maintained.

From Example 2, it can be seen that the effect of the present invention can be achieved even when the alkyl radical scavenger is a benzofuranone.

From Examples 1, 3, and 4, it shows that the alkyl radical scavenger alone, regardless of presence or absence of an antioxidant, is effective in suppressing the deterioration of 3-methyl-1-butene polymer during melt-kneading. On the other hand, from Comparative Example 3, it shows that it would not be effective without the alkyl radical scavenger.

From Examples 1 and 5, it is found to have an effect of suppressing the deterioration of the 3-methyl-1-butene polymer during melt-kneading, even when the amount of the alkyl radical scavenger to be added is 0.02 parts by mass.

From Example 6 and Comparative Example 2, it is found that the composition containing the antioxidant described in Patent Literature 1 has some effect of suppressing the deterioration of the 3-methyl-1-butene polymer during melt-kneading, but the effect is insufficient compared to the case where no stabilizer is added, and an alkyl radical scavenger is necessary. Moreover, from Comparative Example 4, it is found that the composition containing the antioxidant described in Patent Literature 2 is not sufficiently effective for suppressing the deterioration of the 3-methyl-1-butene polymer during melt-kneading.

From Examples 7 and 8, it is found that a 3-methyl-1-butene copolymer or a 3-methyl-1-butene homopolymer having a high copolymerization rate still has the effect of suppressing the deterioration by an alkyl radical scavenger during melt-kneading.

From Example 1 and Comparative Examples 1, 5 and 6, it is found that the effect of suppressing deterioration of the 3-methyl-1-butene polymer by an alkyl radical scavenger during melt-kneading is exhibited by kneading under a lower oxygen state than that of atmospheric air, for example, in an inert atmosphere.

From Example 1 and Comparative Example 7, it is found that catechols have no effect of suppressing the deterioration of the 3-methyl-1-butene polymer during melt-kneading.

From Example 1 and Comparative Example 8, it is found that nitroxyl radicals have no effect of suppressing the deterioration of the 3-methyl-1-butene polymer during melt-kneading.

From Comparative Examples 7 and 8, it is considered that catechols and nitroxy radicals do not have a function of stabilizing, and therefore cannot achieve the effect of the present invention.

## Claims

1. A method for producing a melt-kneaded composition comprising:
a step of performing melt-kneading of 3-methyl-1-butene polymer and an alkyl radical scavenger at 300 to 380 °C under a lower oxygen state than that of atmospheric air.

2. The method for producing a melt-kneaded composition according to claim 1, further comprising: a step of injecting an inert gas into a melt-kneader,
wherein the melt-kneading is performed in the melt-kneader.

3. The method for producing a melt-kneaded composition according to claim 1 or 2, further comprising: a step of degassing the inside of a melt kneader under reduced pressure,
wherein the melt-kneading is performed in the melt-kneader.

4. A method for producing a melt-kneaded composition comprising:
a step of performing melt-kneading of 3-methyl-1-butene polymer and an alkyl radical scavenger,
wherein the melt-kneading is performed at 300 to 380 °C, and
wherein the melt-kneading is performed by injecting an inert gas into a melt-kneader, or the melt-kneading is performed by degassing the inside of the melt- kneader under reduced pressure.

5. The method for producing a melt-kneaded composition according to any one of claims 1 to 4,
wherein the melt-kneading is performed for 1 to 15 minutes.

6. The method for producing a melt-kneaded composition according to any one of claims 1 to 5,
wherein the 3-methyl-1-butene polymer is at least one selected from the group consisting of a 3-methyl-1-butene homopolymer and a copolymer of 3-methyl-1-butene and an α-olefin having 2 to 20 carbon atoms.

7. The method for producing a melt-kneaded composition according to claims 6,
wherein a content of structural units derived from the α-olefin in the copolymer is more than 0 mol% and 20 mol% or less.

8. The method for producing a melt-kneaded composition according to any one of claims 1 to 7,
wherein the alkyl radical scavenger comprises at least one selected from the group consisting of an acrylphenol compound and a benzofuranone compound.

9. The method for producing a melt-kneaded composition according to claim 8,
wherein the acrylphenol compound is represented by the following general formula (I): 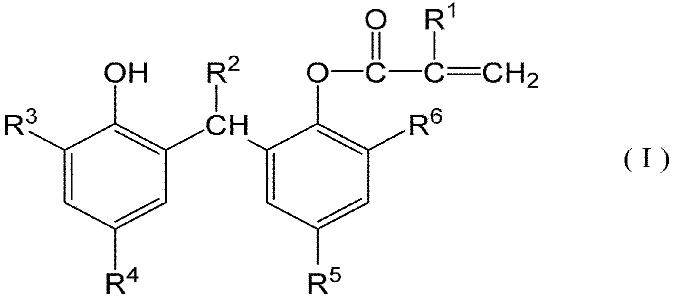 wherein, R¹ represents a hydrogen atom or a methyl group, R² represents a hydrogen atom or an alkyl group having 1 to 3 carbon atoms, and R³, R⁴, R⁵, and R⁶ each independently represent an alkyl group having 1 to 9 carbon atoms.

10. The method for producing a melt-kneaded composition according to claim 8 or 9, wherein the benzofuranone compound is represented by the following general formula (II): 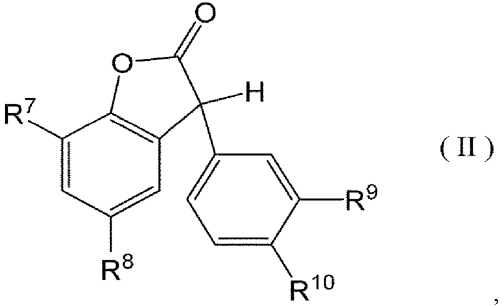 wherein R⁷ and R⁸ each independently represent an alkyl group having 1 to 4 carbon atoms, and R⁹ and R¹⁰ each independently represent an alkyl group having 1 to 9 carbon atoms.

11. The method for producing a melt-kneaded composition according to any one of claims 1 to 10,
wherein a blending amount of the alkyl radical scavenger is 0.01 to 1.00 parts by mass based on 100 parts by mass of the 3-methyl-1-butene polymer.

12. The method for producing a melt-kneaded composition according to any one of claims 1 to 11,
wherein in the step of melt-kneading, the melt-kneading is performed by further adding at least one antioxidant selected from the group consisting of a phenol-based antioxidant and a phosphorus-based antioxidant.

13. A melt-kneaded composition which is produced by the method for producing a melt-kneaded composition according to any one of claims 1 to 12.
